# EUROPÄISCHE PATENTSCHRIFT

(11) **EP 2 867 080 B1**
(45) Veröffentlichungstag und Bekanntmachung des Hinweises auf die Patenterteilung: **02.11.2016**
(21) Anmeldenummer: 13718115.2
(22) Anmeldetag: 12.04.2013
(51) Int. Cl.: B60T 17/00, B01D 53/04, B01D 53/26

(54) **LUFTTROCKNER MIT EINE MEMBRANE BEINHALTENDER REGENERATIONSLUFT-SCHALTEINRICHTUNG**
AIR DRYER WITH MEMBRANE REGENERATIVE VALVE
DESSICCATEUR D'AIR AVEC SOUPAPE DE RÉGENERATION À DIAPHRAGME

(30) Priorität: 13.04.2012 DE 102012007475
(43) Veröffentlichungstag der Anmeldung: 06.05.2015
(73) Patentinhaber: KNORR-BREMSE Systeme für Nutzfahrzeuge GmbH, 80809 München (DE)
(72) Erfinder: TÓTH, Janos, H-6000 Kecskemét (HU); KÁNTOR, Kornél, H-6000 Kecskemét (HU); TANCZOS, Miklos, H-6000 Kecskemét (HU)
(86) Internationale Anmeldenummer: PCT/EP2013/001084
(87) Internationale Veröffentlichungsnummer: WO 2013/152868

(56) Entgegenhaltungen:
- EP-B1- 0 405 073
- DE-A1- 19 523 219

## Beschreibung

Die Erfindung geht aus von einem Lufttrockner für von einem Kompressor aufladbare, wenigstens einen Druckluftbehälter aufweisende Druckluftanlagen, insbesondere für Druckluftbremsanlagen von Fahrzeugen, gemäß dem Oberbegriff von Anspruch 1.

Lufttrockner dienen in Druckluftbremsanlagen zum Reinigen und zum Trocknen der von einem Kompressor geförderten Luft und zum Regulieren des Betriebsdrucks in den Druckluftbehältern. Das Trocknen der Luft erfolgt mittels Adsorbtion in einem Molekularsieb, welches durch ein Trockenmittel von Granulatform gebildet ist. Zur Regeneration des Trockenmittels wird ein Teil der getrockneten Luft entspannt und in entgegen gesetzter Richtung durch die Trocknungspatrone und damit durch das Trocknungsmittel geleitet. Durch die Druckabsenkung sinkt der Partialdruck des Wasserdampfes in der Regenerationsluft, d.h. es bildet sich extrem trockene Luft, wodurch die Regenerationsluft in der Lage ist, die im Trockenmittel enthaltene Feuchtigkeit aufzunehmen.

In DE 195 23 219 A1 ist eine Vorrichtung zum zeitabhängigen Steuern der Regenerationsdauer eines Lufttrockners offenbart, mit einem Absperrventil in einer Leitung zwischen einem Regenerationsluft bereit stellenden Behälter und einem im Gegenstromverfahren regenerierbaren Lufttrockner. Das Absperrventil ist für die Regeneration des Lufttrockners von einem Steuerdruck in seine Durchlassstellung schaltbar und mit Federkraft gegen seine pneumatische Verzögerungsrichtung in seine die Regeneration beendende Sperrstellung zurückführbar.

Bei gattungsgemäßen Lufttrocknern, wie z.B. gemäß EP 0 405 073 B1, wird die Regenerationsluft über eine im Lufttrockner integrierte Regenerationsluft-Schalteinrichtung nach Art eines pneumatischen Zeitschalters gesteuert. Bei der gattungsgemäßen EP 0 405 073 B1 beinhaltet die Regenerationsluft-Schalteinrichtung einen zwei Kammern trennenden Kolben, welch mit einem Ventilsitz zusammen wirkendes Ventilglied eines Ventils betätigt. Die eine Kammer ist dabei ständig mit der Atmosphäre und die andere Kammer über einen Druckluftkanal vom Schaltdruck des Druckreglers beaufschlagbar. Da der Kolben gegenüber dem Gehäuse durch Dichtungen abgedichtet ist, verursacht die Reibung zwischen Kolben/Dichtung einerseits und dem Gehäuse andererseits eine unerwünschte Hysterese, wodurch Ungenauigkeiten beim Schalten der Regenerationsluft-Schalteinrichtung entstehen können. Weiterhin ist der Fertigungsaufwand für einen solchen Kolben unter anderem wegen der engen Tolerierung relativ hoch.

Der vorliegenden Erfindung liegt demgegenüber die Aufgabe zugrunde, einen Lufttrockner der oben erwähnten Art derart weiter zu entwickeln, dass er einfacher und günstiger zu fertigen ist.

Diese Aufgabe wird erfindungsgemäß durch die Merkmale von Anspruch 1 gelöst.

### Offenbarung der Erfindung

Gemäß der Erfindung wird vorgeschlagen, dass das Betätigungselement wenigstens eine Membrane beinhaltet. Aufgrund der Verwendung einer Membrane anstatt eines Kolbens wie in EP 0 405 073 B1 wird der Hysterese-Einfluss merklich gesenkt. Darüber hinaus ist eine solche Membrane wegen geringerer Materialkosten und geringerer Toleranzanforderungen auch kostengünstiger herstellbar als ein Kolben.

Durch die in den Unteransprüchen aufgeführten Maßnahmen sind vorteilhafte Weiterbildungen und Verbesserungen der in den unabhängigen Ansprüchen angegebenen Erfindung möglich.

Bevorzugt ist beispielsweise die eine Kammer der Regenerationsluft-Schalteinrichtung über den einen Druckluftkanal mit der Trocknungspatrone sowie über wenigstens ein in Strömungsrichtung zur anderen Kammer öffnendes Rückschlagventil und über wenigstens eine Drossel mit der anderen Kammer verbunden. Diese Merkmale können kostengünstig bevorzugt innerhalb der Regenerationsluft-Schalteinrichtung selbst realisiert werden. Dadurch werden die Herstellkosten des Lufttrockners weiter gesenkt. Nicht zuletzt lässt sich auch die Regenerationsdauer während der Regenerationsphase auf einfache Weise einstellen, indem diese Zeitdauer unter anderem von dem Durchmesser der Drosselbohrung abhängt, welche leicht an die jeweilige Größenordnung der Druckluftanlage angepasst werden kann. Genaueres hierzu wird anhand der Beschreibung der Ausführungsbeispiele klar.

Besonders bevorzugt erstreckt sich das Ventilglied vom Ventilsitz durch die andere Kammer hindurch bis in die eine Kammer und ist von wenigstens einer Druckfeder gegen den Ventilsitz belastet.

Gemäß einer Weiterbildung weist das Ventilglied an seinem vom Ventilsitz abgewandten Ende eine Druckplatte auf, an welcher wenigstens eine das Ventilglied gegen den Ventilsitz drängende und in der einen Kammer aufgenommene Druckfeder abgestützt ist.

Das Rückschlagventil kann gemäß einer bevorzugten Ausführungsform als Dichtung zwischen einer radial äußeren Umfangsfläche des Ventilglieds und der radial inneren Umfangsfläche der das Ventilglied längsbeweglich führenden Bohrung des Gehäuses ausgebildet sein.

Dann mündet beispielsweise der eine Druckluftkanal in Strömungsrichtung gesehen in eine der Dichtung vorgeordnete Ringkammer und der Dichtung ist weiterhin eine weitere Ringkammer nachgeordnet, welche mit der anderen Kammer in Verbindung steht.

Alternativ kann das Rückschlagventil wenigstens einen durch den Druck in der einen Kammer steuerbaren Ventilkörper beinhalten, welcher durch Federbelastung gegen eine Mündung wenigstens einer im Ventilglied ausgebildeten, die eine Kammer mit der anderen Kammer verbindenden Bohrung gedrängt ist. Hierbei kann die wenigstens eine Bohrung in der Druckplatte des Ventilglieds ausgebildet sein.

Besonders bevorzugt ist die wenigstens eine Membrane mit ihrem Außenrand am Gehäuse befestigt und bildet mit ihrem Innenrand auf der Mündung der Bohrung auf der der anderen Kammer zugewandten Seite der Druckplatte des Ventilglieds lose aufliegend zumindest einen Teil des Ventilkörpers. Alternativ kann die wenigstens eine Membrane mit ihrem Außenrand am Gehäuse und mit ihrem Innenrand an der Druckplatte des Ventilglieds befestigt sein.

Die wenigstens eine Drossel ist bevorzugt in einer im Ventilglied ausgebildeten Bohrung ausgebildet. Hierzu kann das Ventilglied an seinem zum Ventilsitz weisenden Ende eine Querbohrung aufweisen, welche mit einer sich bis in die eine Kammer erstreckenden Längsbohrung verbunden ist, wobei von der Längsbohrung eine Querbohrung in die andere Kammer abzweigt, in welcher die Drossel ausgebildet ist.

Genaueres geht aus der folgenden Beschreibung von Ausführungsbeispielen hervor. Dabei sind in den Ausführungsbeispielen identische oder gleich wirkende Bauelemente und Baugruppen mit den jeweils gleichen Bezugszahlen gekennzeichnet.

### Zeichnungen

Nachstehend sind Ausführungsbeispiele der Erfindung in der Zeichnung dargestellt und in der nachfolgenden Beschreibung näher erläutert. In der Zeichnung zeigt
- Fig.1: eine schematischen Querschnitt durch einen Lufttrockner während einer Förderphase;
- Fig.2: eine schematischen Querschnitt durch einen Lufttrockner während einer Regenerationsphase;
- Fig.3: eine schematischen Querschnitt durch eine Regelungseinheit eines Lufttrockners nach Fig.1 und Fig.2 gemäß einer bevorzugten Ausführungsform der Erfindung.
- Fig.4: eine schematischen Querschnitt durch eine Regelungseinheit eines Lufttrockners nach Fig.1 und Fig.2 gemäß einer weiteren Ausführungsform der Erfindung;
- Fig.5: eine schematischen Querschnitt durch eine Regelungseinheit eines Lufttrockners nach Fig.1 und Fig.2 gemäß einer weiteren Ausführungsform der Erfindung.

### Beschreibung der Ausführungsbeispiele

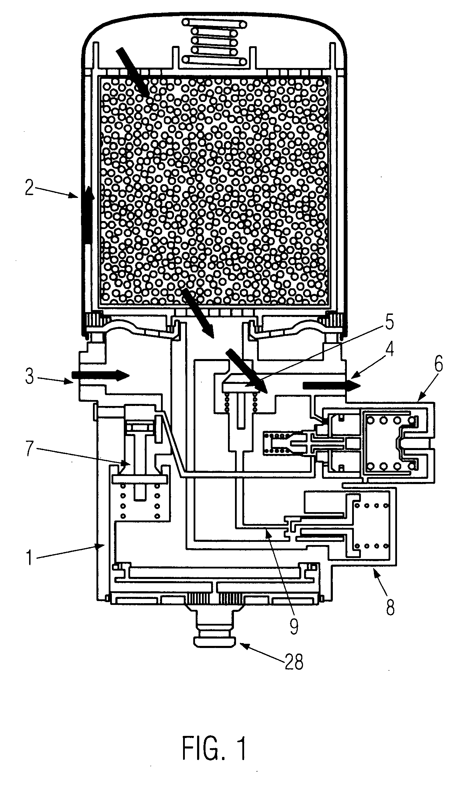

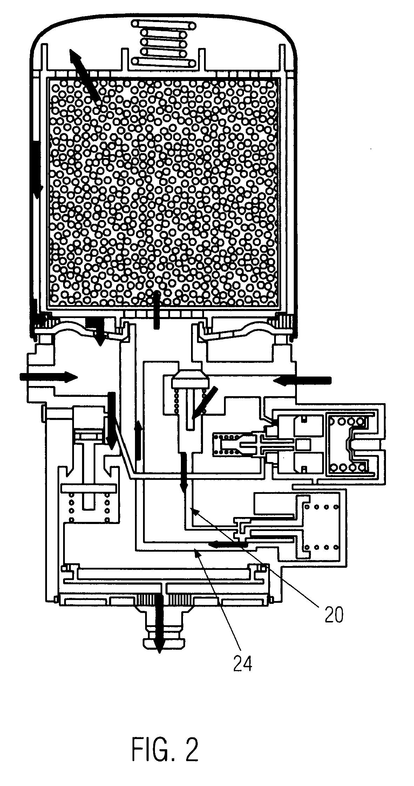

Der Lufttrockner nach Fig.1 und Fig.2 hat ein Gehäuse 1 und eine im Gehäuse 1 angeordnete Trocknungspatrone 2. Dabei wird Druckluft, gefördert von einem hier nicht gezeigten Kompressor während einer Förderphase über einen Eingangsanschluss 3 zugeführt, durch die Trocknungspatrone 2 und durch ein Rückschlagventil 5 hindurch zu einem Ausgangsanschluss 4 für wenigstens einen hier nicht gezeigten Druckluftbehälter geleitet (siehe Pfeile in Fig.1). Die Trocknungspatrone 2 ist mit Adsorbergranulat befühlt, welches von der Druckluft durchströmt wird und dadurch seine gebundene Feuchtigkeit größtenteils verliert.

Im Gehäuse 1 ist weiterhin ein Druckregler 6 angeordnet, welcher ein Abblasventil 7 druckluftsteuert. Bei Erreichen eines vorgegebenen oberen Abschaltdrucks am Ausgangsanschluss 4 bzw. im Druckluftbehälter wird das Abblasventil 7 von dem vom Druckregler 6 ausgesteuerten Druck geöffnet, gleichzeitig schließt das Rückschlagventil 5. Diese Situation ist in Fig. 2 dargestellt. So wird, wenn der Druckluftbehälter ausreichend befüllt und der obere Abschaltdruck erreicht ist, die vom Kompressor weiterhin geförderte Druckluft mittels des Abblasventils 7 über eine Entlüftung 28 in die Atmosphäre geleitet.

Gleichzeitig wird eine zeitlich limitierte Rückströmung von Druckluft aus dem Druckluftbehälter über den Ausgangssnschluss 4 ermöglicht, und zwar um das Rückschlagventil 5 herum, durch eine Regenerationsluft-Schalteinrichtung 8, die Trocknungspatrone 2 und durch das Abblasventil 7 hindurch und von dort über die Entlüftung 28 in die Atmosphäre (siehe Pfeile in Fig.2). Die Regenerationsluft-Schalteinrichtung 8 ist dabei dem Ausgangsanschluss 4 und der Trocknungspatrone 2 zwischengeordnet und insbesondere mittels eines Druckluftkanals 20 mit dem Ausgangsanschluss 4 und mittels eines Druckluftkanals 24 mit der Trocknungspatrone 2 und dadurch mit dem Abblasventil 7 verbunden. Die Luft im Druckluftbehälter ist bereits abgetrocknet und strömt während der Rückströmung im Rahmen einer Regenerationsphase durch eine in dem Druckluftkanal 20 angeordnete Drossel 9 hindurch, wonach sie stark expandiert. Das Adsorbergranulat in der Trocknungspatrone 2 wird dabei von der rückströmenden, bereits entfeuchteten Druckluft entwässert.

Der Aufbau und die Funktionsweise eines solchen Lufttrockners sind beispielsweise aus EP 0 405 073 B1 hinreichend bekannt, weshalb weitere Erläuterungen hierzu dieser Druckschrift entnommen werden können. Der hier beschriebene Lufttrockner unterscheidet sich vor allem hinsichtlich der Ausführung der Regenerationsluft-Schalteinrichtung 8 von der EP 0 405 073 B1, welche in Fig.1 und Fig.2 noch in einer Ausführung nach dem Stand der Technik dargestellt ist.

Die Regenerationsluft-Schalteinrichtung 8 hat die Aufgabe, die Rückströmung von Druckluft aus dem Druckluftbehälter in die Trocknungspatrone 2 während der Regenerationsphase zeitlich zu limitieren, um eine möglichst geringe Druckluftmenge der im Druckluftbehälter gespeicherten Druckluft für die Regenerierungsphase zu verbrauchen.

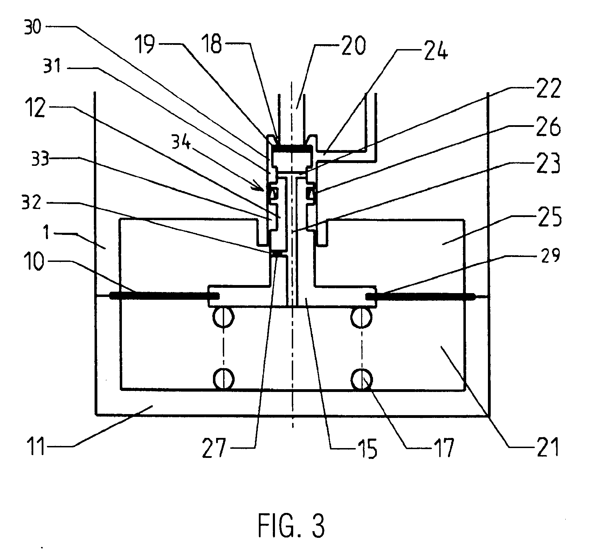

Bei dem ersten Ausführungsbeispiel einer Regenerationsluft-Schalteinrichtung 8 nach Fig.3 ist eine einen Ventilkörper 12 steuernde Membrane 10 an ihrem Außenrand zwischen dem Gehäuse 1 und einem Deckel 11 geklemmt und weist eine zentrale Öffnung auf, deren Innenrand 29 bevorzugt an einer Druckplatte15 des Ventilkörpers 12 druckluftdicht befestigt ist. Die Membrane 10 trennt zwei Kammern 21, 25 voneinander.

Der Ventilkörper 12 weist eine zentrale Längsbohrung 23 auf, die über eine sich anschließende Querbohrung 22 und über eine zwischen einer als Bohrung 30 ausgeführten Ventilkörper-Führung im Gehäuse 1 ausgebildete Ringkammer 31 mit dem Luftkanal 24 in Strömungsverbindung steht. Weiterhin zweigt von der Längsbohrung 23 eine weitere Querbohrung 32 ab, die in die Kammer 25 mündet und in welcher eine Drossel 27 angeordnet ist. Nicht zuletzt ist an der radial äußeren Umfangsfläche des Ventilkörpers 12 eine Dichtung 26 angeordnet, welche z.B. als Nutring oder K-Ring ausgebildet ist und gegen die radial innere Umfangsfläche der Bohrung 30 dichtet.

Diese Dichtung 26 ist so ausgebildet, dass sie zwar eine Druckluftströmung vom Druckluftkanal 24 über die bevorzugt als radiale Ausnehmung im Ventilkörper ausgebildete Ringkammer 31 in eine weitere, ebenfalls bevorzugt als Ausnehmung im Ventilkörper 12 ausgebildete Ringkammer 33 zulässt, aber eine Rückströmung von der Ringkammer 33 in die Ringkammer 31 nicht. Hierdurch wirkt die Dichtung 26 als Rückschlagventil 34 mit einer von dem Druckluftkanal 24 in die Ringkammer 33 zulassenden Strömung, aber eine diesbezügliche Rückströmung sperrenden Eigenschaft. Die Ringkammer 33 steht wiederum mit der Kammer 25 in Strömungsverbindung, so dass das hier durch die Dichtung 26 gebildete Rückschlagventil 34 in Strömungsrichtung vom Druckluftkanal 24 bzw. von der Kammer 21 zur Kammer 25 hin öffnet und in Gegenströmungsrichtung sperrt.

Der Ventilkörper 12 weist an seinem einen, den Kammern 21, 25 zugewandten Ende die Druckplatte 15 auf, an welcher eine andererseits am Boden der Kammer 21 abgestützte Druckfeder 17 abgestützt ist. Durch die Federkräfte der Druckfeder 17 wird ein an dem den Kammern 21, 25 abgewandten Ende des Ventilkörpers 12 angeordnetes Dichtelement 19, beispielsweise ein Gummielement gegen einen im Druckluftkanal 20 ausgebildeten Ventilsitz 18 gedrängt, um ein durch den Ventilkörper 12 bzw. das dort angeordnete Dichtelement 19 und den Ventilsitz 18 gebildetes Ventil zu schließen.

Die Kammer 21 steht daher durch die Bohrungen 22, 23 und den Druckluftkanal 24 mit der reinen Seite der Trocknungspatrone 2 und durch die Trocknungspatrone mit dem Abblasventil 7 in Verbindung, aber sie ist vom Druckluftkanal 20 durch das Ventil 18, 19 absperrbar. Die Kammer 25, welche vom Gehäuse 1, von der Membrane 10 und von der Druckplatte 15 des Ventilkörpers 12 begrenzt wird, ist von der Kammer 21 durch die als Rückschlagventil 34 wirkende und in dieser Richtung sperrende Dichtung 26 getrennt, steht aber durch die Drossel 27 mit der Längsbohrung 23 in Verbindung, welche wiederum mit der Kammer 21 verbunden ist. Mit anderen Worten stehen die beiden Kammern 21, 25 mit dem Druckluftkanal 24 in Verbindung, wobei die Verbindung zwischen der Kammer 21 und dem Druckluftkanal 24 durch die Bohrungen 22, 23 bzw. zwischen der Kammer 25 und dem Druckluftkanal 24 durch die Drossel 27 und die Bohrungen 22, 23 verwirklicht ist. Dadurch steht die Kammer 25 aber auch über die Drossel 27 mit dem Druckluftkanal 24 in Verbindung.

Während einer Förderphase, während der Druckluft vom Eingangsanschluss 3 durch die Trocknungspatrone 2 und durch das Rückschlagventil 5 hindurch zum Ausgangsanschluss 4 gefördert wird (siehe Fig.1), sind beide Druckluftkanäle 20, 24 belüftet. Das Ventil 18, 19 ist federbelastet durch die Druckfeder 17 (noch) geschlossen, so dass über das Ventil 18, 19 keine Druckluft zwischen den Druckluft-kanälen 20, 24 ausgetauscht werden kann. Jedoch gelangt Druckluft aus dem Druckluftkanal 24 mittels der Bohrungen 22, 23 einerseits in die Kammer 21. Andererseits strömt auch Druckluft durch die Bohrungen 22, 23, 32 und die Drossel 27 in die Kammer 25. Des Weiteren strömt in dem Druckluftkanal 24 anstehende Druckluft aber auch in die Ringkammer 31 und an der als sich in dieser Strömungsrichtung öffnendes Rückschlagventil 34 wirkenden Dichtung 26 vorbei in die Ringkammer 33 und von dort in die Kammer 25. Somit sind beide Kammern 21, 25 der Regenerationsluft-Schalteinrichtung 8 während der Förderphase belüftet, wobei Druckausgleich in den Kammern 21, 25 und damit an der Membrane 10 herrscht, so dass die Druckfeder 17 das Ventil 18, 19 geschlossen halten kann.

Wenn der Druckluftbehälter dann soweit mit Druckluft befüllt ist, bis der obere Abschaltdruck erreicht ist (Ende der Förderphase), schaltet der Druckregler 6 um und das Abblasventil 7 wird von dem von ihr ausgesteuerten Druck geöffnet. Gleichzeitig schließt das Rückschlagventil 5. Diese Situation zeigt Fig.2. Dann herrscht ein Druckgefälle zwischen dem Ausgangsanschluss 4 und dem Druckluftkanal 20 einerseits, wo der obere Abschaltdruck ansteht und dem Druckluftkanal 24 andererseits, der dann über die Trocknungspatrone 2 und das geöffnete Abblasventil 7 mit der Entlüftung 28 und damit mit dem Atmosphärendruck in Verbindung steht. Aufgrund diese Druckgefälles strömt die in der Kammer 21 anstehende Druckluft durch die Bohrungen 22, 23, den Druckluftkanal 24, die Trocknungspatrone 2 und das Abblasventil 7 zur Entlüftung 28, so dass die Kammer 21 schnell vom Druck entlastet wird.

Die Druckluft in der Kammer 25 strömt dagegen durch die Querbohrung 32 und die darin angeordnete Drossel 27 sowie die Längsbohrung 23 langsamer in den Druckluftkanal 24 und von dort über die Entlüftung 28 aus. Dadurch bleibt Druck in der Kammer 25 für eine gewisse Zeit so hoch, dass die Membrane 10 und damit der Ventilkörper 12 gegen die Wirkung der Feder 17 in Öffnungsrichtung gedrängt werden, wobei der Ventilkörper 12 mit dem Dichtelement 19 vom Ventilsitz 18 abgehoben wird und eine Rückströmung vom Druckluftbehälter über den Ausgangsanschluss 4 und die Druckluftkanäle 20, 24 in die Trocknungspatrone 2 und von dort über das geöffneten Abblasventil 7 ermöglicht wird. Damit beginnt die Regenerierungsphase. Sie dauert so lange, bis das Druckniveau in der Kammer 25 durch das Ausströmen von Druckluft soweit abgefallen ist, dass die Federkräfte der Druckfeder 17 das Ventil 18, 19 wieder schließen können. Dann ist die Regenerierungsphase beendet.

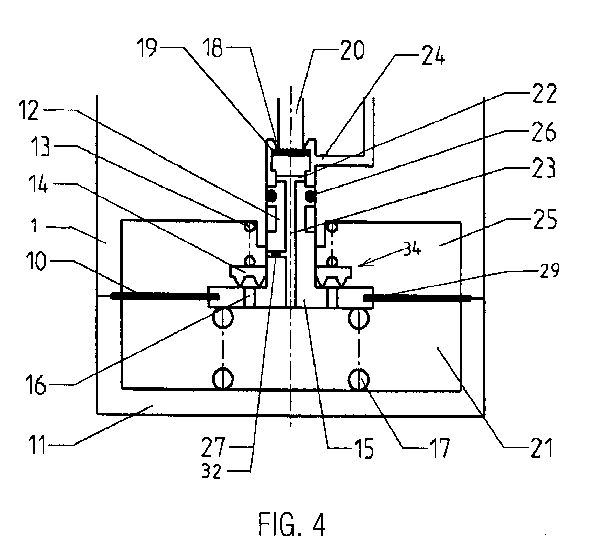

Ein weiteres Ausbildungsbeispiel einer Regenerationsluft-Schalteinrichtung 8 nach Fig.4 unterscheidet von dem Ausführungsbeispiel nach Fig.3 dadurch, dass die Dichtung 26, hier z.B. ein O-Ring in beiden Strömungsrichtungen dichtet. Dafür ist an der Druckplatte 15 des Ventilkörpers 12 ein Rückschlagventil 34 zwischen der Kammer 21 und der Kammer 25 vorgesehen, welches einen durch eine am Gehäuse 1 abgestützte Druckfeder 13 in Schließrichtung belasteten Ventilkörper 14 sowie Ventilsitze ausgebildet sind so dass das Rückschlagventil 34 die Mündung der wenigstens einer Bohrung 16 in der Druckplatte 15 schließen kann. Der Ventilkörper 14 wird dabei bevorzugt durch einen Ring mit zwei zur Druckplatte 15 weisenden Ringvorsprüngen gebildet, zwischen welchen dann die Mündungen der Bohrungen 16 angeordnet sind. Der Ventilkörper ist durch eine Druckfeder 13 gegen die Mündungen der Bohrungen 16 belastet, um das Rückschlagventil 34 zu schließen. Ab einer bestimmten Druckdifferenz zwischen den Kammer 21, 25, wobei der Druck in der Kammer 21 höher sein muss als der in der Kammer 25, hebt der Ventilkörper 14 von den Mündungen der Bohrungen 16 ab, um eine Verbindung zwischen der einen Kammer 21 und der anderen Kammer 25 herzustellen. Das Rückschlagventil 34 gestattet daher zwar eine Strömung von der Kammer 21 in die Kammer 25, sperrt aber stets eine diesbezügliche Rückströmung.

Während der Förderphase wird zuerst die Kammer 21 durch die Bohrungen 22, 23 mit Druckluft belüftet und erst wenn sich das Rückschlagventil 34 gegen die Federkraft der Druckfeder 13 öffnet, wird auch die Kammer 25 durch die Bohrungen 16 der tellerförmigen Druckplatte 15 des Ventilkörpers 12 belüftet. Weiterhin findet auch eine Einströmung von Druckluft aus dem Druckluftkanal 24 über die Bohrungen 22, 23, 32 und damit über die Drossel 27 statt, jedoch bedingt durch die verengte Drosselbohrung verlangsamt. Dadurch wird die Kammer 21 schneller belüftet als die Kammer 25, so dass das Ventil 18, 19 am Anfang der Förderphase schnell schließt und während der Förderphase immer sicher geschlossen bleibt.

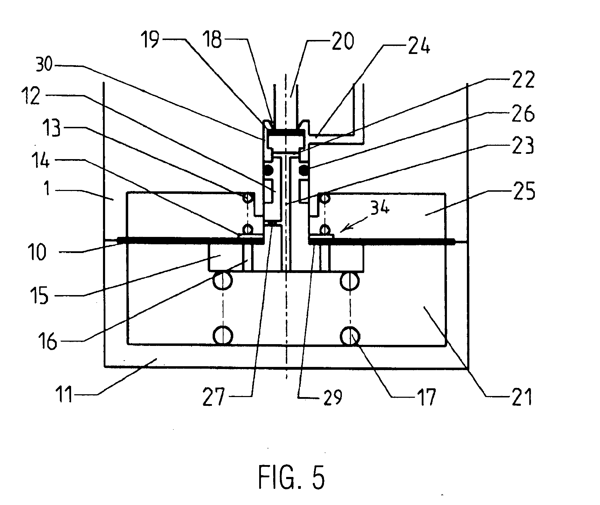

Bei einem weiteren Ausbildungsbeispiel nach Fig.5 ist ebenfalls ein Rückschlagventil 34 zwischen der Kammer 21 und der Kammer 25 vorgesehen, wobei das Rückschlagventil 34 ab einem bestimmten Druckniveau in der Kammer 21 eine Strömung von der Kammer 21 in die Kammer 25 gestattet, aber stets eine diesbezügliche Rückströmung sperrt. Bei diesem Ausführungsbeispiel erstreckt sich die Membrane 10 mit ihrem Innenrand 29 soweit nach radial innen, dass sie mit ihrem Innenrand 29 die Bohrungen 16 in der Druckplatte 15 überdecken kann. Dabei bildet der Innenrand 29 der Membrane 10 einen Teil des Ventilkörpers 14 des Rückschlagventils 34, welcher weiterhin eine durch eine am Gehäuse 1 abgestützte Druckfeder 13 belastete Ringscheibe 14 beinhaltet. Die Druckfeder 13 drängt dann die Ringscheibe 14 gegen den Innenrand 29 der Membrane 10 und diesen dann die zur Kammer 25 gewandten Mündungen der Bohrungen 16, wodurch das Rückschlagventil 34 geschlossen gehalten wird. Der Innenrand 29 der Membrane ist lose gegenüber der Druckplatte 15 und wird nur durch die Wirkung der Druckfeder 13 gegen diese gepresst. Wenn daher der lose Innenrand 29 der Membrane 10 gegen die Wirkung der Druckfeder 13 von den Mündungen der Bohrungen 16 abgehoben ist, besteht eine Strömungsverbindung zwischen der Kammer 21 und der Kammer 25 und das Rückschlagventil 34 ist geöffnet.

Während der Förderphase wird, wie bei den vorangehenden Ausführungsbeispielen bereits erläutert, der Ventilkörper 12 und damit das Dichtelement 19 von der Druckfeder 17 gegen den Ventilsitz 18 gedrängt und damit das Ventil 18, 19 geschlossen. Somit der wird der Druckluftkanal 20 vom Druckluftkanal 24 durch das Ventil 18, 19 getrennt.

Ein aus Förderphase und Regenerationsphase bestehender Zyklus beginnt, wenn das Abblasventil 7 geschlossen ist und sich die Regenerationsluft-Schalteinrichtung 8 in der in Fig.5 gezeigten Stellung befindet, d.h. dass das Ventil 18, 19 geschlossen ist und die Kammern 21, 25 entlüftet sind. Dann beginnt der Kompressor, den Druckluftbehälter durch die Trocknungspatrone 2 hindurch zu füllen. Es wird Druck in beiden Druckluftkanälen 20, 24 und damit über die Bohrungen 22, 23 auch in der Kammer 21 aufgebaut. Wenn der Druck in der Kammer 21 ein gewisses Niveau erreicht hat, wird der lose Innenrand 29 der Membrane 10 von dem Druck in der Kammer 21 gegen die Wirkung der Druckfeder 13 von der Druckplatte 15 und damit von den Mündungen der Bohrungen 16 abgehoben. Dadurch kann Druckluft von der Kammer 21 durch die Bohrungen 16 hindurch den losen Innenrand 29 der Membrane 10 umströmend in die Kammer 25 gelangen. Weiterhin kann auch eine Strömung von der Kammer 21 durch die Drossel 27 in die Kammer 25 stattfinden. Damit herrscht Druckausgleich zwischen den Kammern 21, 25 und die Druckfeder 17 hält das Ventil 18, 19 geschlossen.

Wenn der Druck im Druckluftbehälter während der Förderphase den oberen Abschaltdruck erreicht hat, steuert der Druckregler 6 einen Steuerdruck aus, welcher das Abblasventil 7 öffnet. Dadurch fällt der Druck im Druckluftkanal 24 und damit in der Kammer 21 schnell ab. In der Kammer 25 fällt der Druck hingegen langsam ab, weil der Innenrand 29 der Membrane 10 als Rückschlagventil die Bohrungen 16 verschlossen hält und eine Entlüftung der Kammer 25 nur durch die Drossel 27 stattfinden kann. So steht in der Kammer 25 ein höherer Druck als in der Kammer 21 an. Der hohe Druck in der Kammer 25 wirkt von oben auf die Membrane 10 verschließt nicht nur das durch die Ringscheibe 14, die Druckfeder 13 und den Innenrand 29 gebildete Rückschlagventil 34, sondern schiebt auch den Ventilkörper 12 gegen die Wirkung der Druckfeder 17 in Fig.5 nach unten, um das Ventil 18, 19 zu öffnen. Dadurch wird der Druckluftkanal 20 mit dem Druckluftkanal 24 verbunden, wodurch durch die Druckluftkanäle 20, 24 Druckluft vom Druckluftbehälter über den Ausgangsanschluss 4 durch die Trocknungspatrone 2 hindurch zur Entlüftung 28 ins Freie strömt, um die Trocknungspatrone 2 zu regenerieren.

Nach einiger Zeit (Regenerationszeit) baut sich aber über die Drossel 27 der Druck in der Kammer 25 wieder ab, so dass die Federkräfte der Druckfeder 17 das Ventil 18, 19 wieder schließen. Diese Regenerationszeit ist unter anderem abhängig von der Größe der Kammer 25, der Federkraft der Druckfeder 17, den Abmessungen der Membrane 10 und dem Durchmesser der Drosselbohrung der Drossel 27 und wird bevorzugt so eingestellt, dass die Regenerationszeit ausreichend lang, aber kürzer als die Öffnungszeit des Abblasventils 7 ist. Die Öffnungszeit des Abblasventils 7 hängt nämlich nur vom Druck im Druckluftbehälter ab und ist unter normalen Betriebsverhältnissen, d.h. wenn es kein hoher Druckluftverlust auftritt, länger als die Regenerationszeit.

### Bezugszeichenliste

- 1: Gehäuse
- 2: Trocknungspatrone
- 3: Eingangsanschluss
- 4: Ausgangsanschluss
- 5: Rückschlagventil
- 6: Druckregler
- 7: Abblasventil
- 8: Regenerationsluft-Schalteinrichtung
- 9: Drossel
- 10: Membrane
- 11: Deckel
- 12: Ventilkörper
- 13: Druckfeder
- 14: Ventilkörper
- 15: Druckplatte
- 16: Bohrungen
- 17: Druckfeder
- 18: Ventilsitz
- 19: Dichtelement
- 20: Druckluftkanal
- 21: Kammer
- 22: Querbohrung
- 23: Längsbohrung
- 24: Druckluftkanal
- 25: Kammer
- 26: Dichtung
- 27: Drossel
- 28: Entlüftung
- 29: Innenrand
- 30: Bohrung
- 31: Ringkammer
- 32: Querbohrung
- 33: Ringkammer
- 34: Rückschlagventil

## Patentansprüche

1. Lufttrockner für von einem Kompressor aufladbare, wenigstens einen Druckluftbehälter aufweisende Druckluftanlagen, insbesondere für Druckluftbremsanlagen von Fahrzeugen, mit einem Gehäuse (1), an welchem ein mit dem Kompressor zu verbindender Eingangsanschluss (3) und ein mit dem Druckluftbehälter zu verbindender Ausgangsanschluss (4) vorgesehen sind, wobei im Gehäuse (1) eine ein regenerierbares Trockenmittel enthaltende Trocknungspatrone (2) aufgenommen ist, derart, dass während einer Förderphase die zu trocknende Druckluft in Reihe den Eingangsanschluss (3), die Trocknungspatrone (2) und ein im Gehäuse (1) dem Ausgangsanschluss (4) vorgeschaltetes, in Strömungsrichtung zu diesem öffnendes Rückschlagventil (5; 34) durchströmt, und mit einem im Gehäuse (1) integrierten Druckregler (6), der mittels seines Schaltdrucks das Öffnen und Schließen eines mit dem Eingangsanschluss (3) verbundenen Abblasventils (7) sowie eine Regenerationsluft-Schalteinrichtung (8) überwacht, derart, dass während einer Regenerationsphase Druckluft im umgekehrter Strömungsrichtung aus dem Druckluftbehälter in den Ausgangsanschluss (4), durch die Regenerationsluft-Schalteinrichtung (8), die sich regenerierende Trocknungspatrone (2) und durch das Abblasventil (7) über eine Entlüftung (28) zur Atmosphäre abströmt, wobei die Regenerationsluft-Schalteinrichtung (8) eine zwei Kammern (21, 25) trennendes, durch den Druck in wenigstens einer der Kammern (21, 25) gegen Federkraft steuerbares Betätigungselement (10) aufweist, zur Betätigung eines mit einem Ventilsitz (18) eines Ventils (12, 18) zusammen wirkenden, in einer Bohrung (30) des Gehäuses (1) längsbeweglich geführten Ventilglieds (12), wobei das Ventil (12, 18) eine Druckluft-Strömungsverbindung zwischen einem mit der Trocknungspatrone (2) in Verbindung stehenden Druckluftkanal (24) und einem anderen, mit dem Ausgangsanschluss (4) in Verbindung stehenden Druckluftkanal (20) steuert, **dadurch gekennzeichnet, dass** das Betätigungselement wenigstens eine Membrane (10) beinhaltet.

2. Lufttrockner nach Anspruch 1, **dadurch gekennzeichnet, dass** sich das Ventilglied (12) vom Ventilsitz (18) durch die andere Kammer (25) hindurch bis in die eine Kammer (21) erstreckt und von wenigstens einer Druckfeder (17) gegen den Ventilsitz (18) belastet ist.

3. Lufttrockner nach Anspruch 2, **dadurch gekennzeichnet, dass** das Ventilglied (12) an seinem vom Ventilsitz (18) abgewandten Ende eine Druckplatte (15) aufweist, an welcher wenigstens eine das Ventilglied (12) gegen den Ventilsitz (18) drängende und in der einen Kammer (21) aufgenommene Druckfeder (17) abgestützt ist.

4. Lufttrockner nach Anspruch 3, **dadurch gekennzeichnet, dass** das Rückschlagventil (34) als Dichtung (26) zwischen einer radial äußeren Umfangsfläche des Ventilglieds (12) und der radial inneren Umfangsfläche der das Ventilglied (12) längsbeweglich führenden Bohrung (30) des Gehäuses (1) ausgebildet ist.

5. Lufttrockner nach Anspruch 4, **dadurch gekennzeichnet, dass** der eine Druckluftkanal (24) in Strömungsrichtung gesehen in eine der Dichtung (26) vorgeordnete Ringkammer (31) mündet und der Dichtung (26) eine weitere Ringkammer (33) nachgeordnet ist, welche mit der anderen Kammer (25) in Verbindung steht.

6. Lufttrockner nach Anspruch 3, **dadurch gekennzeichnet, dass** das Rückschlagventil (34) wenigstens einen durch den Druck in der einen Kammer (21) steuerbaren Ventilkörper (14) beinhaltet, welcher durch Federbelastung gegen eine Mündung wenigstens einer im Ventilglied (12, 15) ausgebildeten, die eine Kammer (21) mit der anderen Kammer (25) verbindenden Bohrung (16) gedrängt ist.

7. Lufttrockner nach Anspruch 6, **dadurch gekennzeichnet, dass** die wenigstens eine Bohrung (16) in der Druckplatte (15) des Ventilglieds (12) ausgebildet ist.

8. Lufttrockner nach Anspruch 7, **dadurch gekennzeichnet, dass** die wenigstens eine Membrane (10) mit ihrem Außenrand am Gehäuse (1) befestigt ist und mit ihrem Innenrand (29) auf der Mündung der Bohrung (16) auf der der anderen Kammer (25) zugewandten Seite der Druckplatte (15) des Ventilglieds (12) lose aufliegend zumindest einen Teil des Ventilkörpers (14) bildet.

9. Lufttrockner nach einem der Ansprüche 3 bis 7, **dadurch gekennzeichnet, dass** die wenigstens eine Membrane (10) mit ihrem Außenrand am Gehäuse (1) und mit ihrem Innenrand an der Druckplatte (15) des Ventilglieds (12) befestigt ist.

10. Lufttrockner nach wenigstens einem der vorhergehenden Ansprüche, **dadurch gekennzeichnet, dass** die wenigstens eine Drossel (27) in einer im Ventilglied (12) ausgebildeten Bohrung (32) ausgebildet ist.

11. Lufttrockner nach Anspruch 10, **dadurch gekennzeichnet, dass** das Ventilglied (12) an seinem zum Ventilsitz (18) weisenden Ende eine Querbohrung (22) aufweist, welche mit einer sich bis in die eine Kammer (21) erstreckenden Längsbohrung (23) verbunden ist, wobei von der Längsbohrung (23) eine Querbohrung (32) in die andere Kammer (25) abzweigt, in welcher die Drossel (27) ausgebildet ist.

12. Lufttrockner nach einem der vorhergehenden Ansprüche, **dadurch gekennzeichnet, dass** die eine Kammer (21) der Regenerationsluft-Schalteinrichtung (8) über den einen Druckluftkanal (24) mit der Trocknungspatrone (2) sowie über wenigstens ein in Strömungsrichtung zur anderen Kammer (25) öffnendes Rückschlagventil (34) und über wenigstens eine Drossel (27) mit der anderen Kammer (25) verbunden ist.

## Claims

1. Air dryer for compressed air systems, in particular for air brake systems of vehicles, which are chargeable by a compressor and comprise at least one compressed air reservoir, said air dryer having a housing (1) on which are provided an inlet port (3) which is to be connected to the compressor and an outlet port (4) which is to be connected to the compressed air reservoir, wherein a drying cartridge (2) which includes a drying agent capable of regeneration is accommodated in the housing (1) in such a manner that during a delivery phase the compressed air to be dried flows in series through the inlet port (3), the drying cartridge (2) and a non-return valve (5; 34) which is connected upstream of the outlet port (4) in the housing (1) and opens to said outlet port in the direction of flow, and having a pressure regulator (6), which is incorporated in the housing (1) and, by means of its switching pressure, monitors the opening and closing of a relief valve (7) which is connected to the inlet connection (3), as well as a regeneration air switching device (8) in such a manner that during a regeneration phase compressed air flows in the reverse direction of flow out of the compressed air reservoir into the outlet port (4), through the regeneration air switching device (8), the regenerating drying cartridge (2) and through the relief valve (7) via a vent (28) to the atmosphere, wherein the regeneration air switching device (8) comprises an actuating element (10), which separates two chambers (21, 25) and is controllable against spring force as a result of the pressure in at least one of the chambers (21, 25), for actuating a valve member (12) which interacts with a valve seat (18) of a valve (12, 18) and is guided in a longitudinally movable manner in a bore (30) of the housing (1), wherein the valve (12, 18) controls a compressed air flow connection between a compressed air channel (24) which is connected to the drying cartridge (2) and another compressed air channel (20) which is connected to the outlet port (4), **characterised in that** the actuating element includes at least one membrane (10).

2. Air dryer according to claim 1, **characterised in that** the valve member (12) extends from the valve seat (18) right through the other chamber (25) as far as into the one chamber (21) and is loaded against the valve seat (18) by at least one compression spring (17).

3. Air dryer according to claim 2, **characterised in that** the valve member (12) comprises on its end remote from the valve seat (18) a pressure plate (15), on which is supported at least one compression spring (17) which urges the valve member (12) against the valve seat (18) and is accommodated in the one chamber (21).

4. Air dryer according to claim 3, **characterised in that** the non-return valve (34) is designed as a seal (26) between a radially outer circumferential face of the valve member (12) and the radially inner circumferential face of the bore (30) of the housing (1) which guides the valve member (12) in a longitudinally movable mariner.

5. Air dryer according to claim 4, **characterised in that** the one compressed air channel (24), when viewed in the direction of flow, opens out into an annular chamber (31) which is arranged upstream of the seal (26) and a further annular chamber (33) which communicates with the other chamber (25) is arranged downstream of the seal (26).

6. Air dryer according to claim 3, **characterised in that** the non-return valve (34) includes at least one valve body (14) which is controllable by the pressure in the one chamber (21) and is urged as a result of spring loading against a mouth of at least one bore (16) which is formed in the valve member (12, 15) and connects the one chamber (21) to the other chamber (25).

7. Air dryer according to claim 6, **characterised in that** the at least one bore (16) is formed in the pressure plate (15) of the valve member (12).

8. Air dryer according to claim 7, **characterised in that** the at least one membrane (10) is fastened by way of its outside edge on the housing (1) and forms at least part of the valve body (14) by way of its inside edge (29) loosely lying on the mouth of the bore (16) on the side of the pressure plate (15) of the valve member (12) which faces the other chamber (25).

9. Air dryer according to any of claims 3 to 7, **characterised in that** the at least one membrane (10) is fastened by way of its outside edge on the housing (1) and by way of its inside edge on the pressure plate (15) of the valve member (12).

10. Air dryer according to any of the preceding claims, **characterised in that** the at least one restrictor (27) is formed in a bore (32) which is formed in the valve member (12).

11. Air dryer according to claim 10, **characterised in that** the valve member (12) comprises on its end pointing towards the valve seat (18) a transverse bore (22) which is connected to a longitudinal bore (23) which extends as far as into the one chamber (21), wherein a transverse bore (32) branches from the longitudinal bore (23) into the other chamber (25) in which the restrictor (27) is formed.

12. Air dryer according to any of the preceding claims, **characterised in that** the one chamber (21) of the regeneration air switching device (8) is connected to the drying cartridge (2) by way of the one compressed air channel (24) and to the other chamber (25) by way of at least one non-return valve (34) which opens in the direction of flow to the other chamber (25) and by way of at least one restrictor (27).

## Revendications

1. Dessicateur d'air pour des systèmes à air comprimé, notamment pour des systèmes de frein à air comprimé de véhicules, pouvant être chargés par un compresseur et ayant au moins un réservoir d'air comprimé, comprenant une enveloppe (1), sur laquelle sont prévus un raccord (3) d'entrée à relier au compresseur et un raccord (4) de sortie à relier au réservoir d'air comprimé, une cartouche (2) de séchage contenant un agent dessicateur régénérable étant reçue dans l'enveloppe (1), de manière à ce que, pendant une phase de transport, l'air comprimé à sécher passe en série dans le raccord (3) d'entrée, la cartouche (2) de séchage et un clapet antiretour (5; 34), monté dans l'enveloppe (1) en amont du raccord (4) de sortie s'ouvrant par rapport à celui-ci dans le sens du courant, et comprenant un régleur (6) de pression, qui est intégré dans l'enveloppe (1) et qui, au moyen de sa pression de commutation, contrôle l'ouverture et la fermeture d'un robinet (7) de vidange, relié au raccord (3) d'entrée, ainsi qu'un dispositif (8) de commutation d'air de régénération, de manière à ce que, pendant une phase de régénération, de l'air comprimé sorte par l'intermédiaire d'une mise (28) à l'atmosphère dans le sens contraire du courant du réservoir d'air comprimé au raccord (4) de sortie en passant par le dispositif (8) de commutation d'air de régénération, la cartouche (2) de séchage à régénérer et le robinet (7) de vidange, le dispositif (8) de commutation d'air de régénération ayant un élément (10) d'actionnement séparant deux chambres (21, 25) et pouvant être commandé par la pression dans au moins l'une des chambres (21, 25) à l'encontre d'une force de ressort pour l'actionnement d'un obturateur (12) de robinet coopérant avec un siège (18) d'un robinet (12, 18) et mobile longitudinalement dans un alésage (30) de l'enveloppe (1), le robinet (12, 18) commandant une liaison d'écoulement d'air comprimé entre un conduit (24) d'air comprimé communiquant avec la cartouche (2) de séchage et un autre conduit (20) d'air comprimé communiquant avec le raccord (4) de sortie, **caractérisé en ce que** l'élément d'actionnement comporte au moins une membrane (10).

2. Dessicateur suivant la revendication 1, **caractérisé en ce que** l'obturateur (12) s'étend du siège (18) jusque dans la une chambre (21) en passant dans l'autre chambre (25) et est soumis à l'action d'au moins un ressort (17) de compression, le poussant sur le siège (18).

3. Dessicateur suivant la revendication 2, **caractérisé en ce que** l'obturateur (12) a, à son extrémité éloignée du siège (18), un plateau (15) d'application d'une pression, sur lequel est appuyé au moins un ressort (17) de compression repoussant l'obturateur (12) sur le siège (18) et logé dans la une chambre (21).

4. Dessicateur suivant la revendication 3, **caractérisé en ce que** le clapet antiretour (34) est constitué sous la forme d'une étanchéité (26) entre une surface périphérique extérieure radialement de l'obturateur (12) et la surface périphérique intérieure radialement de l'alésage (30) de l'enveloppe (1) guidant de manière mobile longitudinalement l'obturateur (12).

5. Dessicateur suivant la revendication 4, **caractérisé en ce que** le un conduit (24) d'air comprimé débouche, considéré dans le sens du courant, dans une chambre (31) annulaire en amont de l'étanchéité (26) et une autre chambre (33) annulaire, qui communique avec l'autre chambre (25), est disposée en aval de l'étanchéité (26).

6. Dessicateur suivant la revendication 3, **caractérisé en ce que** le clapet antiretour (34) comporte au moins un obturateur (14), qui peut être commandé par la pression dans la une chambre (21) et qui, par la charge d'un ressort, est repoussé sur une embouchure d'au moins un alésage (16) constitué dans l'obturateur (12, 15) et mettant la une chambre (21) en communication avec l'autre chambre (25).

7. Dessicateur suivant la revendication 6, **caractérisé en ce que** le au moins un alésage (16) est constitué dans le plateau (15) d'application d'une pression de l'obturateur (12).

8. Dessicateur suivant la revendication 7, **caractérisé en ce que** la au moins une membrane (10) est fixée, par son bord extérieur, à l'enveloppe (1) et, par son bord (29) intérieur, à l'embouchure de l'alésage (16) du côté, tourné vers l'autre chambre (25), du plateau (15) d'application d'une pression de l'obturateur (12) forme, en s'appliquant de manière lâche, au moins une partie de l'obturateur (14).

9. Dessicateur suivant l'une des revendications 3 à 7, **caractérisé en ce que** la au moins une membrane (10) est fixée, par son bord extérieur, à l'enveloppe (1) et, par son bord intérieur, au plateau (15) d'application d'une pression de l'obturateur (12).

10. Dessicateur suivant l'une des revendications précédentes, **caractérisé en ce que** le au moins un étranglement (27) est formé dans un alésage (32) constitué dans l'obturateur (12).

11. Dessicateur suivant la revendication 10, **caractérisé en ce que** l'obturateur (12) a, sur son côté tourné vers le siège (18), un alésage (22) transversal, qui communique avec un alésage (23) longitudinal s'étendant jusque dans la une chambre (21), un alésage (32) transversal bifurquant de l'alésage (23) longitudinal dans l'autre chambre (25), dans laquelle l'étranglement (27) est formé.

12. Dessicateur suivant l'une des revendications précédentes, **caractérisé en ce que** la une chambre (21) du dispositif (8) de commutation d'air de régénération communique par le un conduit (24) d'air comprimé avec la cartouche (2) de séchage, ainsi que, par au moins un clapet antiretour (34) s'ouvrant dans le sens du courant vers l'autre chambre (25) et par au moins un étranglement (27), avec l'autre chambre (25).
